# EUROPEAN PATENT APPLICATION

(11) **EP 4 653 208 A1**
(43) Date of publication of application: **26.11.2025**
(21) Application number: 24177379.5
(22) Date of filing: 22.05.2024
(51) Int. Cl.: B60C 1/00, C08L 15/00

(54) **VEHICLE TIRE COMPOSITIONS COMPRISING GRANULATED SILICA AND MICRO PEARL SILICA**

(71) Applicant: Bridgestone Europe NV/SA, 1930 Zaventem (BE)
(72) Inventor: Martino, Giorgia, 00128 Roma (IT); Aurisicchio, Claudia, 00128 Roma (IT); Spiezia, Antonella, 00128 Roma (IT)
(74) Representative: Dehns

(57) **Abstract**

The present invention relates to vehicle tire compositions, to methods for their preparation and to vehicle tires made from the compositions, where the compositions contain both granulated silica and micro pearl silica. The present invention also relates to the use of granulated silica and micro pearl silica in a vehicle tire composition to improve dispersion of the silica compared 100% granulated silica and/or 100% micro pearl silica, while maintaining good mechanical properties.

## Description

### Field of the Invention

The present invention relates to vehicle tire compositions, to methods for their preparation and to vehicle tires made from the compositions, where the compositions contain both granulated silica and micro pearl silica. The present invention also relates to the use of granulated silica and micro pearl silica in a vehicle tire composition to improve dispersion of the silica compared 100% granulated silica and/or 100% micro pearl silica, while maintaining good mechanical properties.

### Background of the Invention

Reinforcing fillers have been used in tires for many years to improve the mechanical properties of rubber compositions. Traditionally fillers have included carbon black, chalk, talc, kaolin, bentonite, titanium dioxide, and silica. Silica has been found to be particularly advantageous in terms of lowering rolling resistance and improving traction, particularly on wet surfaces. Silica derived from sand is traditionally used, but more recently efforts to improve the environmental sustainability of tires has led to a focus on using raw materials that renewable, notably silica obtained from rice husk ash.

Silica can be manufactured and processed in different ways to give it different properties, depending on the desired use. In the tire industry, either granulated silica or micro pearl silica can be used as a filler.

The present invention aims to optimise both the dispersibility of the silica filler, and the mechanical properties of tires compared to when 100% granulated silica or 100% micro pearl silica is used.

### Summary of the Invention

According to a first aspect, the invention relates to a vehicle tire composition comprising: 100 phr of a rubber component; and 50 to 160 phr silica, wherein the silica comprises 30 to 70% by weight granulated silica and 30 to 70% by weight micro pearl silica.

According to a second aspect, the invention relates to a vehicle tire comprising a vehicle tire composition according to the first aspect of the invention.

According to a third aspect, the invention relates to a process for producing a vehicle tire composition according to the first aspect, said process comprising the steps of introducing silica into the rubber component to produce a vulcanizable rubber compound; and subjecting said vulcanizable rubber compound to vulcanization by heating to a predetermined temperature and for a predetermined time; wherein said silica comprises 30 to 70% by weight granulated silica and 30 to 70% by weight micro pearl silica.

According to a fourth aspect, the invention relates to the use of 30 to 70% by weight granulated silica and 30 to 70% by weight micro pearl silica in a vehicle tire composition to improve the dispersion of the silica, compared 100% granulated silica and/or 100% micro pearl silica, while maintaining good mechanical properties.

Micro pearl silica is highly dispersible in the rubber component and therefore can be used to ensure good processability and silica dispersion. However, using micro pearl silica alone has been found to adversely affect the mechanical properties of a tire in some compounds. The inventors have surprisingly discovered that using both granulated silica and micro pearl silica advantageously and surprisingly allows for improved dispersion of the silica compared to using micro pearl silica and/or granulated silica alone, while maintaining good mechanical properties.

### Detailed Description of the Invention

The invention relates to a vehicle tire composition comprising 100 phr of a rubber component. In line with convention, "phr" is parts per hundred parts of the rubber component. By "rubber component", we mean a component in the composition which is a rubber. The term "rubber", as used herein, is intended to include natural rubber and synthetic rubbers. The terms "rubber" and "elastomer" are used interchangeably, unless otherwise specified.

Any known rubber component or blend of rubber components may be used in the vehicle tire compositions according to the invention and those skilled in the art can readily select a suitable rubber or blend of rubbers having in mind the intended use of the composition. Non-limiting examples of suitable rubbers for use in the composition are well-known to those skilled in the art and include natural rubber, synthetic polyisoprene rubber, styrene-isoprene rubber, styrene-butadiene rubber, butadiene rubber, styrene-isoprene-butadiene rubber, butadiene-isoprene rubber, polybutadiene, butyl rubber, neoprene, acrylonitrile-butadiene rubber, silicone rubber, fluoroelastomers, ethylene acrylic rubber, ethylene-propylene rubber, ethylene-propylene terpolymer, ethylene vinyl acetate copolymer, epichlorohydrin rubber, chlorinated polyethylene-propylene rubber, chlorosulfonated polyethylene rubber, hydrogenated nitrile rubber, and tetrafluoroethylene-propylene rubber. The ratio of any rubber blends can be selected according to need, for example based on the viscoelastic properties of the rubber composition. Those skilled in the art can readily determine which elastomers may be appropriate and their relative amounts to provide a desired viscoelastic property range.

The rubber component may contain repeat units derived from butadiene. Examples of such rubbers include, but are not limited to, styrene butadiene rubber (SBR) and butadiene rubber (BR).

Natural rubber (NR) is a natural product which can advantageously be included to improve the sustainability credentials of the tire composition, and is also advantageously included.

In one embodiment, the rubber component comprises styrene-butadiene rubber (SBR); natural rubber (NR); and/or butadiene rubber (BR). Preferably the rubber component comprises 70 to 95 phr styrene-butadiene rubber (SBR) and 5 to 30 phr natural rubber (NR) and/or butadiene rubber (BR), preferably natural rubber (NR). SBR is commonly used in the tire industry and can be made by well-known methods, such as by co-polymerisation of the corresponding monomers in emulsion, suspension or in solution. In preferred embodiments, the SBR is solution-polymerised styrene butadiene rubber (SSBR).

In some embodiments, the rubber component can be modified with one or more functional groups and any such functionalised diene rubbers may be used in the invention. Where the rubber is functionalised, any of its polymer backbone, terminal groups and/or side chains may be bound to one or more functional groups. These functional groups may be incorporated into the polymer material during its production or, alternatively, they may be subsequently grafted onto the polymer. The type and position of any functional groups varies in different rubber grades known in the art. The choice of any functionalised rubber will depend on the intended use of the rubber compounds herein described. Examples of functionalised diene rubbers include those which carry one or more reactive groups (e.g. alkoxysilyl groups) and/or one or more interacting groups (e.g. amino groups). Interacting groups such as amino groups may, for example, form hydrogen bonds within the rubber matrix. In one embodiment, the diene rubber for use in the invention is unfunctionalized

In some embodiments, the rubber component for use in the invention comprises an end-group functionalised rubber compound which may have an interactive and/or synergistic impact on the properties of the rubber compositions and give rise to advantageous properties. Specifically, an interaction between the end-group functionalised diene rubber compound and the granulated and/or micro pearl silica, which may be synergistic, and may result in improved dispersion of the silica in the rubber compositions and products made therefrom. An "end-group functionalised" rubber may also be referred to as a "terminal-modified" rubber. In one embodiment, the diene rubber component may be an end-group functionalised SBR, for example an end-group functionalised SSBR.

End-group functionalised rubbers are well known in the art and any of these may be selected for use in the invention. Examples of such rubbers include those described in WO 2014/173706 and in EP 3 725 837, the entire contents of which are incorporated herein by reference.

Modifying functional groups include any functional group that has an affinity for the silica filler. Preferably, it may contain at least one atom selected from a nitrogen atom, a silicon atom, an oxygen atom and a tin atom. Those containing a nitrogen atom, a silicon atom or an oxygen atom are preferred in view of their ability to strongly interact with a silica filler. Functional groups which contain a silicon atom are preferred, for example those having a silicon-carbon bond. Such modifying functional groups may be formed using a suitable coupling agent such as any of those described in EP 3 725 837. Methods for introducing a modifying functional group into the rubber component are well known in the art and may be appropriately selected. These include the use of a functional group-containing polymerization initiator, copolymerizing a functional group-containing monomer with another compound, and reacting a modifying functional agent with terminal groups of the rubber component.

The mean molecular weight (e.g. weight average, Mw) and/or mean molar mass (e.g. number average, Mn) of the diene rubber may be selected to provide suitable and/or desirable physical properties. For example, it will be appreciated that the viscosity, and thus processability, of a rubber compound will increase (e.g. linearly or non-linearly) with increasing mean molecular weight and/or mean molar mass. Those skilled in the art will appreciate which diene rubber compounds have appropriate mean molecular masses and/or mean molar masses. In some embodiments, the diene rubber component for use in the invention may have a mean molar mass (number average, Mn) of 10,000 to 2,000,000 g/mol, preferably 100,000 to 1,000,000 g/mol.

In some embodiments, the rubber component may be an end-group functionalised SBR or SSBR having a mean molar mass (number average, Mn) of 10,000 to 2,000,000 g/mol, preferably 100,000 to 1,000,000 g/mol.

The rubber component, for example the end-group functionalised SSBR copolymer, may have a glass transition temperature of -110° C to +20° C, preferably -60° C to 0° C, preferably -40° C to -10° C, preferably -30° C to -15° C, more preferably -22° C to -26° C, for example -22° C, -23° C, -24° C, -25° C, or -26° C.

In addition to the rubber component; the vehicle tire composition comprises 50 to 160 phr silica. The term "silica" as used herein refers primarily to silicon dioxide, i.e. SiO2, although, as will be understood, the silicon dioxide typically contains a proportion of other components (e.g. as impurities). The content of silicon dioxide in the silica will generally be at least 90 wt.%, preferably at least 95 wt.%, e.g. at least 97 wt.%.

"Granulated" and "micro pearl" silica are well known to the skilled person. Both granulated and micro pearl silica can be manufactured from sand or alternative feedstock such as rice ash husk using a precipitation process using conventional methods. After precipitation the drying process differentiates granulated silica from micro pearl silica. Granulated silica is dried with stirring at a high temperature of, for example, 600 °C. Granulated silica is a compacted powder, which makes handling relatively easy. In contrast, micro pearl silica is spray dried. The result of this is that granulated silica typically has a particle size of 1-5 mm (millimetre), whereas micro pearl silica is smaller, and typically has a particle size of 200-300 µm (micrometer). The small particle size of micropearl silica allows it to be fragmented during the mixing process. In both cases particle size can be measured by Scanning Electronic Microscope (SEM), as is conventional in the art, according to image analysis techniques as described in ISO 13322-1.

In a preferred embodiment, the composition comprises 60 to 130, 60 to 110, 70 to 100 or 80 to 100 phr silica, or may comprises 50 to 90 or 60 to 80 phr silica. The advantages of the invention are thought to be particularly apparent at these relatively high silica loadings.

The silica comprises a substantial amount (30 to 70% by weight) of both granulated silica and micro pearl silica. In one embodiment the silica comprises 40 to 60% or 45 to 55% by weight of both granulated silica and micro pearl silica. In a preferred embodiment the silica comprises about 50% by weight granulated silica and about 50% by weight micro pearl silica. The inventors have discovered that using both granulated silica and micro pearl silica can advantageously and surprisingly allow for improved dispersion of the silica compared to using micro pearl silica and/or granulated silica alone, while maintaining good mechanical properties.

In one embodiment, the granulated silica and the micro pearl silica both a surface area by cetyltrimethylammonium bromide (CTAB) adsorption of at least 170, 180 or 190 m2/g and/or a CTAB surface area of up to 230, 220 or 210 m2/g.

In one embodiment, the granulated silica is characterised by a Brunauer-Emmett-Teller BET surface area of at least 200, 220, or 230 m2/g, and/or a BET surface area of up to 260, 250, or 240 m2/g.

In one embodiment, the micro pearl silica is characterised by a Brunauer-Emmett-Teller BET surface area of at least 180, 190, or 200 m2/g, and/or a BET surface area of up to 240, 230 m2/g, or 220 m2/g.

The granulated silica and/or the micro pearl silica can be derived from sand as has traditionally been the case. Alternatively, the silica can be derived from rice husk ash (RHA), which is a renewable source, so is more environmentally sustainable, and is a good way of disposing of rice husks, which can be difficult to use productively.

Other than the RHA silica and the rubber component, the vehicle tire composition may comprise other components. Further components can include additional polymers, processing aids (such as oils, waxes, resins and plasticisers), curing systems (such as vulcanising agents, vulcanisation accelerators, and vulcanisation accelerator auxiliaries), anti-degradants (such as antioxidants or antiozonants), pigments, additional fillers, compatibilising agents for the fillers (such as silane coupling agents or covering agents), fibres, etc. Those skilled in the art can readily select a combination of vulcanizable rubber compounds and their respective amounts for subsequent mixing and vulcanization according to the specific rubber product which is desired. Depending on the intended use of the vulcanized material, these additives can be selected and used in the conventional amounts.

Processing aids improve the processability of the compositions and include oils, such as mineral oils, vegetable oils, synthetic oils, or any mixtures thereof. These may be used in an amount of from about 1 to 75 phr, preferably from about 5 to 50 phr. Typical processing aids include oils, such as aromatic oils. Examples of such oils include Treated Distillate Aromatic Extract (TDAE), Residual Aromatic Extract (RAE), Mild Extract Solvate (MES), and bio-based oil seed derivatives. The oil for use in the rubber compositions of the present invention is not particularly limited and may be any of those known to the person skilled in the art. For example, the oil may be one or more selected from the group consisting of processed oils such as aromatic oils, naphthenic oils and paraffin oils, vegetable oils such as coconut oil, synthetic oils such as alkylbenzene oils and castor oils. Preferably, the oil is RAE oil and/or 2-ethylhexyl oleate.

The vulcanising agent of the compositions is not particularly limited and may be any of those generally known in the art. For example, the vulcanising agent may be sulfur. The amount of the vulcanising agent is not particularly limited, and an amount effective to achieve a satisfactory cure of the composition may readily be selected by those skilled in the art. The vulcanising agent (e.g. sulfur) may be used in an amount in the range from about 0.1 to about 10 phr, preferably from about 0.1 to about 5 phr, e.g. from about 1 to about 3 phr. For example, the rubber composition may contain from 0.1 to 3 phr, preferably from 0.5 to 2 phr, e.g. from 1 to 1.5 phr, of the vulcanising agent.

The vulcanisation accelerator for use in the composition is not particularly limited and may be any of those generally known in the art. Accelerators include thiazoles, dithiocarbamates, thiurams, guanidines, and sulphonamides. Examples of suitable accelerators include thiazole type vulcanization accelerators such as 2-mercaptobenzothiazole (MBT), dibenzothiazyl disulphide (MBTS), N-cyclohexyl-2-benzothiazyl sulfenamide (CBS), and N-tert-butyl-2-benzothiazolyl sulfenamide (TBBS); guanidine type vulcanization accelerators such as 1,3-diphenyl guanidine (DPG); thiuram-based vulcanization accelerators such as tetramethyl thiuram disulphide, tetrabutyl thiuram disulfide, tetradodecyl thiuram disulfide, tetraoctyl thiuram disulfide, and tetrabenzyl thiuram disulfide; and dithiocarbamate compounds such as dimethyl dithiocarbamate zinc; and other dialkyl dithiophosphoric acid zinc. Preferably, the vulcanisation accelerator may be a combination of dibenzothiazyl disulfide (MBTS), N-cyclohexyl-2-benzothiazyl sulfenamide (CBS), 1,3-diphenyl guanidine (DPG), and/or tetrabenzylthiuram disulphide (TBZTD). The amount of vulcanisation accelerator for use in the compositions is not particularly limited and may, for example, be in the range from about 0.5 to about 10 phr, preferably from about 1 to about 8 phr, more preferably from about 2 to about 6 phr. Preferably, the vulcanisation accelerator may comprise dibenzothiazyl disulfide (MBTS) in an amount from 0.3 to 2 phr, N-cyclohexyl-2-benzothiazyl sulfenamide (CBS) in an amount from 0.5 to 3 phr, N-tert-butyl-2-benzothiazolyl sulfenamide (TTBS) in an amount of 1 to 3 phr, and/or Tetrabenzylthiuram disulphide (TBZtD) in an amount of 0.1 to 2 phr.

The vulcanisation accelerator auxiliary for use in the compositions is not particularly limited and may be any of those known to the person skilled in the art. For example, the vulcanisation accelerator auxiliary may be zinc oxide (ZnO) and a fatty acid. The fatty acid may be any of saturated or unsaturated, or linear or branched fatty acid. The number of carbon atoms of the fatty acid is also not particularly limited, but may be from 1 to 30, or from 15 to 30. For example, the fatty acid may be one or more selected from the group consisting of cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. Preferably the vulcanisation accelerator auxiliary of the present invention is zinc oxide (ZnO) and stearic acid. The total amount of the vulcanisation accelerator auxiliary is not particularly limited, but may be from 1 to 10 phr, preferably from 1.5 to 7 phr, for example, from 2 to 5 phr. Preferably, zinc oxide may be used in an amount of from about 1 to about 10 phr, preferably from about 2 to about 5 phr, more preferably from about 2 to about 3 phr. Stearic acid may be used in an amount of from about 0.1 to about 5 phr, preferably from about 0.5 to about 3 phr.

Advantageously, the only silica-based fillers present in the vehicle tire compositions of the present invention are granulated and micro pearl silica as herein described, i.e. no additional silica is present. In some embodiments, they may constitute all of the reinforcing filler in the rubber composition. However, the presence of additional silica-based fillers or additional non-silica-based fillers is not precluded. Where any additional silica is present, it may be selected from any of those known in the art including, but not limited to, precipitated amorphous silica, wet silica (hydrated silicic acid), dry silica (anhydrous silicic acid), fumed silica, calcium silicate, aluminum silicate, magnesium silicate (e.g. Mg₂SiO₄, MgSiO₃), magnesium calcium silicate (CaMgSiO₄), aluminum calcium silicate (e.g. Al₂O₃.CaO₂SiO₂).

Additional reinforcing fillers such as carbon black, carbon nanotubes, short carbon, polyamide, polyester, natural fibres, calcium carbonate, clay, aluminosilicates, etc. or any mixtures of these may also be present in the rubber compositions of the present invention. The additional fillers may be others known to those skilled in the art, for example, aluminum hydroxide, talc, alumina (Al₂O₃), aluminium hydrate (Al₂O₃.H₂O), aluminum hydroxide (Al(OH)₃), aluminum carbonate (Al₂(CO₃)₂), aluminium magnesium oxide (MgOAl₂O₃), pyrofilite (Al₂O₃.4SiO₂.H₂O), bentonite (Al₂O₃.4SiO₂.2H₂O), mica, kaolin, glass balloon, glass beads, calcium oxide (CaO), calcium hydroxide (Ca(OH)₂), calcium carbonate (CaCO₃), magnesium carbonate, magnesium hydroxide (Mg(OH)₂), magnesium oxide (MgO), magnesium carbonate (MgCO₃), potassium titanate, barium sulfate, zirconium oxide (ZrO₂), zirconium hydroxide (Zr(OH)₂.nH₂O), zirconium carbonate (Zr(CO3)₂), crystalline aluminosilicates, reinforcing grades of zinc oxide (i.e. reinforcing zinc oxide).

The antidegradant for use in the rubber compositions of the present invention is not particularly limited and may be any of those known to the person skilled in the art. The antidegradant may be an antioxidant and/or an antiozonant. For example, the antidegradant may be one or more selected from the group consisting of N-(1,3-dimethylbutyl)-N'-phenyl-p-phenylenediamine (6PPD), 2,2,4-trimethyl-1,2-dihydroquinoline polymer (TMQ) and N'-(1,3 dimethylbutylene)-3-hydroxy-naphthohydrazide (BMH). Preferably, the antidegradant is a combination of N-(1,3-dimethylbutyl)-N'-phenyl-p-phenylenediamine (6PPD) and 2,2,4-trimethyl-1,2-dihydroquinoline polymer (TMQ). The amount of each antidegradant may be from 0.1 to 3 phr, preferably from 0.2 to 2 phr. The total amount of antidegradant may be from 0.1 to 5 phr, preferably 1 to 3 phr.

Covering agents may be used to reduce the formation of silica aggregates during compounding. If present, these may be used in an amount of up to 20 phr, preferably from about 1 to about 15 phr. In one embodiment, no additional covering agents are present. The covering agent is not particularly limited and may be any of those known in the art. Suitable silica-based covering agents include silanes such as alkylalkoxy silanes, e.g. hexadecyltrimethoxy silane, octyltriethoxy silane and hexyltrimethoxy silane. In one embodiment, the covering agent may be grafted beforehand onto the polymer. It may also be used in the free state (i.e. not grafted beforehand) or grafted to the surface of the silica.

Coupling agents which bind to the silanol groups of silica in order to inhibit the agglomeration thereof and which also function to covalently link the silica fillers to the rubber component matrix may be present. The appropriate amount of any coupling agent can be determined by those skilled in the art having in mind factors such as its molecular weight, the number of functional groups it contains and its reactivity. Most coupling agents may be used in an isomolar amount based on the amount of silica. The coupling agent for use in the vehicle tire compositions of the present invention is not particularly limited and may be any of those known to the person skilled in the art. In one embodiment, the coupling agent may be grafted beforehand onto the polymer. It may also be used in the free state (i.e. not grafted beforehand) or grafted to the surface of the silica.

Typically, the coupling agent will be a silane coupling agent, for example a bifunctional silane. For example, the silane coupling agent may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl)tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N dimethylthiocarbamoyl tetrasulfide, and dimethoxymethylsilylpropylbenzothiazolyl tetrasulfide. Preferably, the silane coupling agent is bis(3-triethoxysilylpropyl) tetrasulfide. A specific example of the silane coupling agent for use in the invention is Si 363@ from Evonik Industries AG. The amount of the silane coupling agent is not particularly limited, but may be from 2 to 20 phr, preferably from 5 to 18 phr, more preferably from 7 to 16 phr, for example from 10 to 16 phr.

The vehicle tire compositions according to the invention may be prepared by methods known in the art and will involve the step of introducing the granulated and micro pearl silica filler into the rubber component to produce a vulcanizable rubber compound, in other words mixing (also known as compounding) the rubber component and the silica and any other components herein described to produce a vulcanizable rubber compound. The granulated and micro pearl silica filler can be added at the same time, either separately and blended in the compound, or may be blended before use. Alternatively, the granulated and micro pearl silica filler may be added sequentially.

In preparing the rubber composition of the invention, the method for combining each of the components is not limited and any of the methods known in the art may be used. For example, all of the components may be blended and kneaded at once or they may be blending and kneaded in multiple steps. For blending and kneading, a kneader such as roll kneader, internal mixer or Banbury mixer may be used. For moulding the rubber composition into any desired shape, for example into a sheet or strip shape, any known moulding machine such as an extrusion moulding machine or press moulding machine may be used.

Mixing of the components will usually be carried out in stages in which the components may be added. Multi-step mixing processes are generally preferred to optimise dispersion of the silica filler system and may involve the use of more than one mixer, for example different mixers arranged in series. For example, in the case of mixing a tire tread compound, the mixing process may involve an initial mixing stage in which a masterbatch is produced, followed by one or more additional non-productive mixing stages, and finally a productive mixing stage in which the curative agents (i.e. sulfur or sulfur-donating agents and accelerator(s)) are added. Mixers which may be used are well known in the art and include, for example, an open mill or a Banbury type mixer having tangential or intermeshing rotors.

Typically, the rubber and granulated and micro pearl silica, along with any optional processing aids, zinc oxide, stearic acid, anti-degradants (e.g. anti-oxidants, antiozonants), pigments, additional fillers, compatibilising agents, and coupling agents (where present) are mixed to produce the initial masterbatch. This initial masterbatch may be followed by another masterbatch in which additional fillers and additives are added, or by a non-productive mixing stage in which no additional components are added. Any non-productive mixing stage may be used to further disperse the components (e.g. fillers) within the rubber, or to decrease the viscosity of the mixed rubber compound.

During mixing, the temperature is kept below a predetermined level to avoid premature cross-linking of the composition. Typically, the temperature may be kept below 150°C, preferably below 140°C. In producing the initial masterbatch, mixing may for example be carried out a temperature of from about 80 to about 110°C, e.g. about 100°C. In the non-productive mixing stage, the temperature may be raised, for example up to about 150°C, e.g. about 130°C. If any additional compatibilising agents are added during mixing, it may be necessary to carry out mixing at higher temperatures to ensure that these react with the silica surface. Mixing times may vary but can readily be determined by those skilled in the art based on the composition of the mixture and the type of mixer used. Generally, a mixing time of at least 1 minute, preferably between 2 and 30 minutes, should be sufficient to obtain the desired homogenous composition.

A final mixing stage involves the addition of curatives, including accelerator(s), anti-degradants. The temperature for this mixing stage will generally be lower, for example in the range of from about 40 to about 60°C, e.g. about 50°C. This final mix may also be followed by a further non-productive mixing stage in which no additional components are added.

The most appropriate type of mixing can readily be selected to achieve a vulcanizable rubber compound. Mixing speeds may readily be determined, but may for example range from a speed of from about 20 to about 100 rpm, e.g. from about 30 to about 80 rpm, preferably about 50 rpm.

The vulcanizable rubber compound may be provided as an uncured (so-called "green") tire component for final vulcanisation that cures the composition. Curing to cross-link the rubber components may be carried out by known methods. Accordingly, a subsequent step of the process is to subject the vulcanizable rubber compound to vulcanization by heating to a predetermined temperature and for a predetermined time. In the tire industry, for example, an uncured rubber (so-called "green body") is produced followed by curing in a press mold which concurrently cross-links the rubber components and molds the components into a final tire. Vulcanisation cures the rubber by cross-linking, principally via sulfur cross-links. Vulcanisation methods and conditions for hardening the rubber composition are well known to those skilled in the art. Appropriate vulcanisation conditions typically include heating to a predetermined temperature in the range from 120 to 200°C, e.g. from 140 to 180°C, for a predetermined duration of from 5 to 180 mins, e.g. from 5 to 120 mins.

The vehicle tire compositions herein described find particular use in the manufacture of vehicle tires, in particular in the manufacture of tire components such as tire treads. Tire treads may be used for tires for any vehicle including motor cars.

In some compounds, micro pearl silica has been associated with improved dispersibility but a deterioration in mechanical properties compared to granulated silica. As above, an important aspect of the invention is the finding that 30 to 70% by weight granulated silica and 30 to 70% by weight micro pearl silica can be used in a vehicle tire composition to improve the dispersion of the silica, compared 100% granulated silica and/or 100% micro pearl silica, while maintaining good mechanical properties.

The dispersion of the silica can be measured by E'@30°C, as defined below, and the combination of granulated silica and micro pearl silica can be used to improve the dispersion of the silica, compared 100% granulated silica and/or 100% micro pearl silica. This means that the combination of granulated and micro pearl silica has a lower (better) E'@30°C than the same composition with 100% granulated and/or micro pearl silica.

The mechanical properties of the composition can be measured by (TB) , elongation at break (EB) and/or toughness (TF), as defined below. The combination of granulated silica and micro pearl silica can be used to maintain good mechanical properties for the composition, i.e. better mechanical properties than with 100% micro pearl silica, and preferably close to the excellent mechanical properties shown with 100% granulated silica.

### Measurement methods

### Cetyltrimethylammonium bromide (CTAB) adsorption method

The CTAB specific surface area is the external surface. The surface area of the silica was measured by the CTAB method according to ASTM D6845.

### Brunauer-Emmet-Teller (BET) specific surface area

The average specific surface area of the RHA silica is determined by N2 adsorption according to the BET method as described in the Journal of the American Chemical Society, Vol. 60, page 309, February 1938, and corresponding to standard NF ISO 5794-1, Appendix D (June 2010).

### Modulus

Modulus was measured using a universal testing machine Zwick Z05 (Zwick, Germany) operated with a crosshead speed of 500 mm/min according to ASTM D412-16(2021) and modulus (100% (M100)) and 300% (M300)) were calculated according to the calculations therein.

### Tensile at Break, Elongation at Break and Toughness

The tensile at break (TB), elongation at break (EB) and toughness (TF) are measured according to the ISO 37 standard (2017 edition).

### Elastic Modulus (E')

The Elastic Modulus (E') is used to evaluate grip performance. Dynamic physical testing to determine E' at 30°C was conducted in accordance with the ISO 4664 - 1 :2022 standard. E' at 30°C is used as an indicator of dry balance/handling.

### Examples

### General method

The following components were compounded in a Banbury mixer in the amounts recited in Table 1 to make a vehicle tire composition (compound). The amounts are in phr i.e. parts per hundred rubber. The rubber components are SSBR 1, SSBR 2, and NR.

**Table 1**

| | phr=70 | | | phr=90 | | |
|---|---|---|---|---|---|---|
| | **CTRL 1 granulated** | **CTRL 2 MP** | **EXP blend** | **CTRL 1 granulated** | **CTRL 2 MP** | **EXP blend** |
| **Micropearl HD SiO₂** | **0** | **70** | **35** | **0** | **90** | **45** |
| **Granulated SiO₂** | **70** | **0** | **35** | **90** | **0** | **45** |
| SSBR 1 | 10 | 10 | 10 | 10 | 10 | 10 |
| SSBR 2 | 80 | 80 | 80 | 80 | 80 | 80 |
| NR | 10 | 10 | 10 | 10 | 10 | 10 |
| CB | 5 | 5 | 5 | 5 | 5 | 5 |
| Silane | 8.2 | 8.2 | 8.2 | 9.9 | 9.9 | 9.9 |
| Oil | 6 | 6 | 6 | 6 | 6 | 6 |
| Sulphur | 1.2 | 1.2 | 1.2 | 1.2 | 1.2 | 1.2 |
| DPG | 1.8 | 1.8 | 1.8 | 1.8 | 1.8 | 1.8 |
| MBTS | 1 | 1 | 1 | 1 | 1 | 1 |
| CBS | 1 | 1 | 1 | 1 | 1 | 1 |
| ST ACID | 1 | 1 | 1 | 1 | 1 | 1 |
| TMQ | 0.3 | 0.3 | 0.3 | 0.3 | 0.3 | 0.3 |
| ZnO | 2.5 | 2.5 | 2.5 | 2.5 | 2.5 | 2.5 |
| WAX | 2 | 2 | 2 | 2 | 2 | 2 |
| PVI | 0.2 | 0.2 | 0.2 | 0.2 | 0.2 | 0.2 |
| 6PPD | 1.5 | 1.5 | 1.5 | 1.5 | 1.5 | 1.5 |
| LSA | 5 | 5 | 5 | 5 | 5 | 5 |
| TBzTD | 0 | 0 | 0 | 0 | 0 | 0 |
| Zn salt | 4 | 4 | 4 | 4 | 4 | 4 |
| Res 1 | 10 | 10 | 10 | 10 | 10 | 10 |
| TDAE oil | 4 | 4 | 4 | 4 | 4 | 4 |

### Components

### Silica:

Granulated Silica - Granulated Ultrasil 9001 GR (evonik)
Micro pearl Silica - Micropearl Zeosil Premium 200 MP

### Rubber component:

### Elastomers:

Functionalised solution styrene-butadiene rubber (ENEOS HPR540) (SSBR1)
Functionalised solution styrene-butadiene rubber (Buna FX5000 ) (SSBR2)
Natural Rubber

### Further Additives:

CB - Carbon Black (Corax^{®} N234)
Silane - Silane (Evonik Industries Si69)
Oil - RAE oil
Sulphur
DPG - 1,3-diphenyl guanidine
MBTS - Dibenzothiazyl disulfide
CBS - N-cyclohexyl-2-benzothiazyl sulfenamide
ST Acid - Stearic acid
TMQ - 2,2,4-trimethyl-1,2-dihydroquinoline polymer
ZNO - Zinc oxide
Wax - Microcristalline Wax blend
PVI - Pre-vulcanisation inhibitor
6PPD - N-(1,3-dimethylbutyl)-N'-phenyl-p-phenylenediamine
LSA - Very Low Surface Area Zeosil 1085 GR
TBZtD - Tetrabenzylthiuram disulfide
Zn salt of fatty acid
Res 1 Hydrogenated resin 1 (Synthomer Impera E1780)
TDAE oil - Treated distillate aromatic extracts oil

### Silica Properties

**Table 2**

| | **Granulated silica** | **Micro pearl silica** |
|---|---|---|
| Feedstock | Sand | Sand |
| BET (m²/g) | 235 | 210 |
| CTAB (m²/g) | 200 | 200 |

A series of tests was carried out on the resulting compounds in accordance with the measuring techniques set out above. The results are set out in Table 3.

**Table 3**

| | | phr=70 | | | phr=90 | | |
|---|---|---|---|---|---|---|---|
| | | CTRL 1 granulated | CTRL 2 MP | EXP blend | CTRL 1 granulated | CTRL 2 MP | EXP blend |
| Lower is better | M300 | 100 | 129 | 116 | 100 | 112 | 108 |
| Higher is better | TB | 100 | 94 | 97 | 100 | 95 | 99 |
| | EB | 100 | 82 | 89 | 100 | 91 | 97 |
| | TF | 100 | 77 | 87 | 100 | 87 | 91 |
| Lower is better | E'@30°C | 100 | 108 | 104 | 100 | 90 | 87 |

### Results

Table 3 shows that mechanical properties such as the tensile at break (TB), elongation at break (EB), toughness (TF) and modulus (M300) are improved in the compounds with granulated and micro pearl silica (Exp Blend) at both 70 and 90 phr loadings compared to granulated and/or micro pearl silica alone, showing that good mechanical properties can be maintained with a combination of granulated and micro pearl silica.

Table 3 also shows that Elastic Modulus (E') at 30°C, which is an indicator of dispersion of silica, is lower (better) for the combination of granulated and micro pearl silica than for granulated silica and/or micro pearl silica alone for both 70 and 90 phr silica loadings.

## Claims

1. A vehicle tire composition comprising: 100 phr of a rubber component; and 50 to 160 phr silica, wherein said silica comprises 30 to 70% by weight granulated silica and 30 to 70% by weight micro pearl silica.

2. A vehicle tire composition according to claim 1, which comprises 60 to 130 phr of said silica, preferably 60 to 110 phr or 70 to 100 phr of said silica.

3. A vehicle tire composition according to claim 1 or 2, wherein the silica comprises 40 to 60% by weight granulated silica and 40 to 60% by weight micro pearl silica, preferably wherein the silica comprises 45 to 55% by weight granulated silica and 45 to 55% by weight micro pearl silica, most preferably wherein the silica comprises about 50% by weight granulated silica and about 50% by weight micro pearl silica.

4. A vehicle tire composition according to any preceding claim, wherein the rubber component comprises styrene-butadiene rubber (SBR); natural rubber (NR); and/or butadiene rubber (BR); preferably wherein the rubber component comprises 70 to 95 phr styrene-butadiene rubber (SBR) and 5 to 30 phr natural rubber (NR) and/or butadiene rubber (BR), preferably natural rubber (NR); and preferably wherein the styrene-butadiene rubber (SBR) is solution-polymerised styrene butadiene rubber (SSBR).

5. A vehicle tire composition according to claim 4 which comprises an SSBR which is an end-group functionalised SSBR, preferably an end-group functionalised SSBR having a Tg in the range from -65 to -15°C.

6. A vehicle tire composition according to any preceding claim, wherein the granulated silica and the micro pearl silica both have a CTAB surface area of at least 170 m2/g, preferably at least 180 m2/g, preferably at least 190 m2/g, and/or wherein the granulated and micro pearl silica both have a CTAB surface area of up to 230 m2/g, preferably up to 220 m2/g, preferably up to 210 m2/g.

7. A vehicle tire composition according to any preceding claim, wherein the granulated silica has a BET surface area of at least 200 m2/g, preferably at least 220 m2/g, preferably at least 230 m2/g, and/or wherein the granulated silica has a BET surface area of up to 260 m2/g, preferably up to 250 m2/g, preferably up to 240 m2/g and/or wherein the micro pearl silica has a BET surface area of at least 180 m2/g, preferably at least 190 m2/g, preferably at least 200 m2/g, and/or wherein the micro pearl silica has a BET surface area of up to 240 m2/g, preferably up to 230 m2/g, preferably up to 220 m2/g.

8. A vehicle tire composition according to any preceding claim, wherein the granulated silica has a particle size of 1-5 mm and/or the micro pearl silica has a particle size of 200-300 µm.

9. A vehicle tire composition according to any preceding claim, wherein the granulated silica and/or the micro pearl silica are derived from sand or are derived from rice husk ash.

10. A vehicle tire comprising a vehicle tire composition as claimed in any one of claims 1 to 9.

11. A process for producing a vehicle tire composition as claimed in any one of claims 1 to 9, said process comprising the steps of introducing silica into the rubber component to produce a vulcanizable rubber compound; and subjecting said vulcanizable rubber compound to vulcanization by heating to a predetermined temperature and for a predetermined time; wherein said silica comprises 30 to 70% by weight granulated silica and 30 to 70% by weight micro pearl silica.

12. A process according to claim 11, wherein the vehicle tire composition additionally comprises one or more features of any of claims 2 to 9.

13. The use of 30 to 70% by weight granulated silica and 30 to 70% by weight micro pearl silica in a vehicle tire composition to improve the dispersion of the silica compared 100% granulated silica and/or 100% micro pearl silica, while maintaining good mechanical properties.

14. The use according to claim 13, wherein dispersion of the silica is measured by E'@30°C as described in the description, and mechanical properties are measured by TB, EB and/or TF as described in the description.

15. A use according to claim 13 or 14, wherein the vehicle tire composition additionally comprises one or more features of any of claims 2 to 9.
